# EUROPÄISCHE PATENTSCHRIFT

(11) **EP 4 288 176 B1**
(45) Veröffentlichungstag und Bekanntmachung des Hinweises auf die Patenterteilung: **25.12.2024**
(21) Anmeldenummer: 22711184.6
(22) Anmeldetag: 25.02.2022
(51) Int. Cl.: B01D 21/00, B01D 21/24

(54) **SCHLAMMABSCHEIDER**
DIRT SEPARATOR
SÉPARATEUR DE BOUES

(30) Priorität: 10.03.2021 DE 102021105798
(43) Veröffentlichungstag der Anmeldung: 13.12.2023
(73) Patentinhaber: WashTec Holding GmbH, 86153 Augsburg (DE)
(72) Erfinder: MAYER, Stefan, 86356 Neusäß (DE); SATTLER, Andreas, 81543 München (DE)
(74) Vertreter: Meissner Bolte Partnerschaft mbB
(86) Internationale Anmeldenummer: PCT/EP2022/054849
(87) Internationale Veröffentlichungsnummer: WO 2022/189173

(56) Entgegenhaltungen:
- EP-A1- 0 703 324
- DE-A1- 4 400 712
- FR-A1- 2 536 672
- US-A- 5 180 407
- US-A1- 2005 077 248
- US-A1- 2007 267 342

## Beschreibung

Die vorliegende Erfindung betrifft einen Schlammabscheider, insbesondere für eine Fahrzeugwaschanlage, mit einem Sedimentationsbecken, dass eine Seitenwand und einen Boden aufweist. Das Sedimentationsbecken ist dabei in vertikaler Richtung in einen unteren Sedimentbereich, einen Zwischenbereich und einen oberen Flüssigkeitsaustauschbereich unterteilt. Ferner weist der Schlammabscheider einen Zulauf zum Zuführen einer Feststoffpartikel führenden Flüssigkeit in das Sedimentationsbecken auf, der einen Endabschnitt mit einer Zulauföffnung aufweist, wobei die Zulauföffnung in vertikaler Richtung im oberen Flüssigkeitsaustauschbereich angeordnet ist und in einer horizontalen Ebene in einem Randbereich des Sedimentationsbeckens in das Sedimentationsbecken mündet. Des Weiteren weist der Schlammabscheider einen Ablauf zum Abführen von Flüssigkeit aus dem Sedimentationsbecken auf, der eine Ablauföffnung aufweist, welche in vertikaler Richtung im oberen Flüssigkeitsaustauschbereich angeordnet ist.

Aus der EP 2 463 444 D1 ist ein Schlammabscheider zum Abscheiden von in einer Flüssigkeit enthaltenen Partikeln bekannt. Der Schlammabscheider weist eine obere Einlassöffnung, ein Abscheidergehäuse und eine untere Auslassöffnung auf. Die Einlassöffnung und die Auslassöffnung sind koaxial zur vertikalen Gehäuseachse angeordnet. Der Schlammabscheider wird in vertikaler Richtung von der oberen Einlassöffnung zu der unteren Auslassöffnung durchströmt. Dabei tritt die zugeführte Flüssigkeit durch einen Partikelabscheider mit Strömungsumlenkelementen durch, welche eine Strömungsumlenkung zwischen axialer und radialer Richtung bewirken. Bei diesen Strömungsumlenkelementen werden die abzuscheidenden Stoffe abgeschieden. Sie sedimentieren in einem Auffangtopf und werden von dort über eine Ablaufleitung herausgeführt.

Des Weiteren sind Schlammabscheider bekannt, welche nach dem Zyklon-Prinzip arbeiten. Beispielsweise beschreibt die WO 2009/122127 A1 einen Schlammabscheider mit einem topfartigen Abscheidebehälter mit einem im oberen Behälterbereich angeordneten Einlass zur Zufuhr von Flüssigkeit in den Abscheidebehälter und einen im oberen Behälterbereich angeordneten Auslass zur Abfuhr der Flüssigkeit aus dem Abscheidebehälter. Im Inneren des Abscheidebehälters ist koaxial ein unten offenes Rohr angeordnet. Der Auslass ist kommunizierend mit dem Innenraum des Rohrs verbunden, der Einlass mündet in einen ringförmigen Zwischenraum zwischen der Behälterwand und dem Rohr. Der Einlass und der Auslass sind so angeordnet, dass in den Abscheidebehälter eingeführte Flüssigkeit in einer zyklonartigen Bewegung entlang der Behälterwand abwärts fließt und dann innerhalb der zyklonartig abwärts fließenden Flüssigkeit aufwärts durch das Rohr zum Auslass strömt. Durch die Zyklon-Wirkung ausgeschiedene Feststoffpartikel sinken der Behälterwand entlang nach unten in einen am unteren Behälterende vorgesehenen Schlammabsetzraum.

Weitere Schlammabscheider nach dem Zyklon-Prinzip sind aus der EP 2 893 981 A1 und der EP 3 222 357 B1 bekannt.

Aus der DE 94 14 562 U1 ist ein Schlammfang für Abwässer bekannt, die mit Sinkstoffen verschmutzt sind. Der Schlammfang besteht aus einem Beruhigungsbecken, das einen unteren seitlichen Zulauf und einen oberen Auslauf aufweist. Die Mündung des Zulaufs ist annähernd tangential zur Wand des Beruhigungsbeckens ausgerichtet. Der obere Auslauf ist etwa im Zentrum des Beruhigungsbeckens angeordnet. Ferner ist der zentrale obere Auslauf von einem vertikalachsig um ihn aufgestellten hohlkörperförmigen, durchlässigen Einsatz im Abstand umgeben. Durch die Geometrie des Zulaufs und des Auslaufs wird eine spiralartig verlaufende Strömung um den hohlkörperförmigen Einsatz erzeugt, welche in einer Spirale von unten nach oben zum Auslauf strömt.

Eine Abscheideanlage mit einem ähnlichen Schlammfang ist in der DE 94 12 973 U1 beschrieben. Durch den Schlammfang dieser Abscheideanlage sollen beispielsweise Sinkstoffe im Abwasser einer Autowaschanlage abgetrennt werden.

Des Weiteren ist aus der DE 92 08 367 U1 ein Abscheidebehälter bekannt, welcher wahlweise als Schlammfang oder als Vorabscheider mit einem Einlauf und einem Auslauf eingesetzt werden kann. Der Einlauf und der Auslauf sind bei diesem Abscheidebehälter in etwa in derselben Höhe im oberen Bereich gegenüberliegend am Rand des Behälters angeordnet. Bei dem Einsatz als Schlammfang werden Prallplatten am Einlauf und am Auslauf montiert.

Bei einem Schlammabscheider, welcher beispielsweise in einer Fahrzeugwaschanlage, insbesondere einer Portalwaschanlage, eingesetzt wird, soll das Schmutzwasser der Waschanlage so behandelt werden, dass sich in dem Sedimentationsbecken Feststoffpartikel, welche von dem Schutzwasser mitgeführt werden, absetzen. Dabei soll zum einen die Abscheideleistung des Schlammabscheiders möglichst hoch sein. Zum anderen soll es möglich sein, im Sedimentationsbecken kontinuierlich oder intermittierend während des Betriebs der Waschanlage Schmutzwasser zuzuführen, ohne dass die Dimensionierung des Sedimentationsbeckens zu groß wird. Es soll somit auch kontinuierlich oder intermittierend Flüssigkeit aus dem Sedimentationsbecken wieder herausgeführt werden.

Bei bekannten Schlammabscheidern, die in Waschanlagen eingesetzt wurden, hat sich das Problem ergeben, dass die Abscheideleistung zu gering war. Es befanden sich zu viele Feststoffpartikel, welche mit dem Schmutzwasser dem Sedimentationsbecken zugeführt wurden, noch in der abgeführten Flüssigkeit. Ferner wurde festgestellt, dass sich auf der Auslaufseite ein hoher Nitratgehalt ergab. Ein hoher Nitratgehalt in der aus dem Schlammabscheider ausgeführten Flüssigkeit soll jedoch vermieden werden.

Die US 2007/0267342 A1 beschreibt ein Abscheidungssystem zum Zurückhalten von schwimmenden und nicht schwimmenden Teilchen in einer Lagerkammer eines Behandlungstanks. Die Lagerkammer umfasst einen Einlass und einen Auslass. Der Auslass ist so in der Lagerkammer angeordnet, dass die primären und sekundären Flüssigkeitsströmungsmuster in der Lagerkammer nur minimal gestört werden. In der Lagerkammer wird ein kreisförmiges oder rotierendes Strömungsmuster erzeugt, und eine Auslassöffnung der Lagerkammer ist auf einer Achse des kreisförmigen Strömungsmusters zentriert.

Die EP 0703324 A1 beschreibt einen Schlammfang für mit Sinkstoffen verschmutzte Abwässer, bestehend aus einem Beruhigungsbecken, das einen oberen seitlichen Zulauf und einen oberen Auslauf aufweist. Dabei ist die Mündung des Zulaufs mindestens angenähert tangential zur Wand des Beruhigungsbeckens ausgerichtet ist und der obere Auslauf liegt etwa im Zentrum des Beruhigungsbeckens.

Der vorliegenden Erfindung liegt daher die Aufgabe zugrunde, einen Schlammabscheider anzugeben, welcher eine verbesserte Abscheideleistung für Feststoffpartikel hat, welche über die eingeleitete Flüssigkeit dem Sedimentationsbecken zugeführt werden.

Erfindungsgemäß wird diese Aufgabe durch einen Schlammabscheider mit den Merkmalen des Anspruchs 1 gelöst. Vorteilhafte Ausgestaltungen und Weiterbildungen ergeben sich aus den abhängigen Ansprüchen.

Erfindungsgemäß ist bei dem eingangs beschriebenen Schlammabscheider der Endabschnitt so ausgerichtet, dass die zugeführte Flüssigkeit tangential in das Sedimentationsbecken einströmt, und die Ablauföffnung in einer horizontalen Ebene in einem Mittelbereich des Sedimentationsbeckens angeordnet ist.

Unter Schlamm werden in einem Flüssigkeitsstrom mitgeführte, z.B. suspendierte, Feststoffpartikel verstanden. Unter einem Schlammabscheider im Sinne der Erfindung wird daher eine Vorrichtung zum Abscheiden von Feststoffpartikeln aus einem Flüssigkeitsstrom verstanden.

Unter dem Randbereich des Sedimentationsbeckens wird in dieser Schrift ein radial äußerer Bereich des Sedimentationsbeckens in einer horizontalen Ebene verstanden, in welcher die Einlauföffnung angeordnet ist. Ausgehend von einem geometrischen Mittelpunkt des horizontalen Querschnitts des Sedimentationsbeckens ergibt sich in zumindest einer horizontalen Richtung die größte horizontale Erstreckung des Sedimentationsbeckens. Bei einem kreisscheibenförmigen Querschnitt des Sedimentationsbeckens ist diese größte horizontale Erstreckung der Radius der Kreisscheibe. Der Randbereich reicht in diesem Fall von außen 0 % bis 30 %, insbesondere von 0 % bis 10 %, der größten horizontalen Erstreckung in Richtung des geometrischen Mittelpunkt.

Unter dem Mittelbereich des Sedimentationsbeckens wird in dieser Schrift ein zentraler Bereich des Sedimentationsbeckens in einer horizontalen Ebene verstanden, in welcher die Ablauföffnung angeordnet ist. Ausgehend von dem geometrischen Mittelpunkt dieses horizontalen Querschnitts des Sedimentationsbeckens reicht der Mittelbereich vom geometrischen Mittelpunkt bis 40 %, insbesondere 30 %, zu dem Rand des Sedimentationsbeckens in der jeweiligen horizontalen Richtung.

Unter dem Endabschnitt des Zulaufs wird erfindungsgemäß der Abschnitt des Zulaufs verstanden, welcher die Strömungsrichtung der aus der Zulauföffnung austretenden Flüssigkeit wesentlich bestimmt. Der Endabschnitt ist dabei insbesondere gerade ausgebildet. Er ist dabei im Wesentlichen tangential in Bezug auf das Sedimentationsbecken sowie insbesondere im Wesentlichen horizontal ausgerichtet. Unter einer tangentialen Ausrichtung wird dabei verstanden, dass die Strömungsrichtung bei der Zulauföffnung im Wesentlichen parallel zu einer Tangente am Rand des Sedimentationsbeckens ist.

Der Erfindung liegt die Erkenntnis zugrunde, dass eine verbesserte Abscheideleistung des Schlammabscheiders dadurch erreicht werden kann, dass die Feststoffpartikel führende Flüssigkeit, welche dem Sedimentationsbecken zugeführt wird, im Sedimentationsbecken eine geringer werdende Strömungsgeschwindigkeit aufweist, so dass sich Feststoffpartikel absetzen können. Dabei sollen vertikale Strömungen vermieden werden. Durch Simulationen wurde festgestellt, dass sich in Abhängigkeit von der Zulaufgeometrie eine Flüssigkeitswalze ausbilden kann, die bereits sedimentiertes Material wieder in obere Flüssigkeitsschichten zurücktransportiert. Andererseits wurde festgestellt, dass sich Strömungen ausbilden können, durch welche die Feststoffpartikel führende Flüssigkeit direkt vom Zulauf zum Ablauf geführt wird. Dies ist nachteilig, da keine Feststoffpartikel abgeschieden werden können.

Es wurde festgestellt, dass die tangentiale Zuführung der Feststoffpartikel führenden Flüssigkeit dazu führt, dass sich eine randseitige, umlaufende Strömung mit geringer werdender Strömungsgeschwindigkeit ausbildet, welche das Abscheiden von Feststoffpartikeln begünstigt.

Unter einer im Wesentlichen tangentialen und/oder einer im Wesentlichen horizontalen Ausrichtung des Endabschnitts wird somit verstanden, dass der Endabschnitt so ausgerichtet ist, dass sich eine randseitige, umlaufende Strömung ausbildet.

Ferner wurde festgestellt, dass die tangential im oberen Randbereich des Sedimentationsbeckens einströmende Flüssigkeit in Verbindung mit einer oberen Ablauföffnung, welche sich im horizontalen Mittelbereich des Sedimentationsbeckens befindet, eine randseitig umlaufende Strömung im oberen Flüssigkeitsaustauschbereich bildet und sich im horizontalen Mittelbereich eine im Wesentlichen strömungsfreie Zone ausbildet. Durch die erfindungsgemäße Geometrie und Anordnung des Zulaufs und des Ablaufs wird somit vorteilhafterweise erreicht, dass die Verweilzeit der neu zugeführten Flüssigkeit im Sedimentationsbecken ausreichend groß ist, damit Feststoffpartikel abgeschieden werden können. Es wird insbesondere eine Strömung verhindert, welche direkt von der Zulauföffnung zu der Ablauföffnung führt. Gleichzeitig werden vertikale Strömungen unterbunden, welche nachteilig für die Abscheideleistung des Schlammabscheiders sind. Auf diese Weise kann der erfindungsgemäße Schlammabscheider eine verbesserte Abscheideleistung bereitstellen.

Die Innenwand der Seitenwand des Sedimentationsbeckens ist insbesondere zylindermantelförmig. In einem horizontalen Querschnitt bildet die Innenwand somit einen Kreis. In diesem Fall bildet sich durch das tangentiale Einströmen der Flüssigkeit am äußeren Rand des Sedimentationsbeckens eine langsame horizontale Strömung im oberen Flüssigkeitsaustauschbereich aus, welche eine sehr kleine Strömung in vertikaler Richtung verursacht, so dass keine bereits sedimentierten Partikel nach oben transportiert werden. Gleichzeitig ergibt sich eine lange Aufenthaltsdauer von Flüssigkeitsvolumen im Sedimentationsbecken, so dass Feststoffpartikel besonders gut abgeschieden werden können.

Gemäß anderen Ausgestaltungen kann die Innenwand des Sedimentationsbeckens jedoch auch eine andere Geometrie haben. Sie kann beispielsweise halbkreisförmig oder rechteckig sein.

Bei dem erfindungsgemäßen Schlammabscheider sind in dem Endabschnitt des Zulaufs mehrere Lamellen angeordnet, die insbesondere parallel zueinander ausgerichtet sind.

Es wurde festgestellt, dass eine Eigendrehung der zugeführten Flüssigkeit für die Abscheideleistung des Schlammabscheiders nachteilig ist. Eine solche Eigendrehung führt zu Strömungskomponenten der Strömung im Sedimentationsbecken, welche nach unten gerichtet sind. Eine nach unten gerichtete Strömung im Sedimentationsbecken führt jedoch auch zu einer gegenläufigen, nach oben gerichteten Strömung, durch welcher bereits sedimentierte Feststoffpartikel wieder nach oben transportiert werden. Durch die bei diese Ausgestaltung des erfindungsgemäßen Schlammabscheiders vorgesehenen parallel zueinander ausgerichteten Lamellen im Endabschnitt des Zulaufs wird eine solche Eigenrotation der zugeführten Flüssigkeit vorteilhafterweise verhindert. Die parallel ausgerichteten Lamellen verhindern somit eine Strömung in vertikaler Richtung im Sedimentationsbecken. Es wurde auch festgestellt, dass solche vertikalen Strömungen im Sedimentationsbecken für einen hohen Nitratgehalt auf der Ablaufseite eines herkömmlichen Schlammabscheiders verantwortlich sein können, da durch die vertikale Strömung biologische Abbauprodukte, welche im Sediment entstanden sind, nach oben transportiert wurden, wo sie über den Ablauf abgeführt wurden.

Die über den Zulauf eingeleitete Flüssigkeit weist wegen der Lamellen im Endabschnitt des Zulaufs im Wesentlichen keine Eigenrotation auf. Die Strömung umrundet das Sedimentationsbecken im Wesentlichen in der horizontalen Ebene der Zulauföffnung und wird dabei abgebremst. Sobald die Strömung den Zulauf erneut erreicht, drückt die weiter zulaufende Flüssigkeit die Strömung zwar nach unten. Die nach unten gerichtete Komponente der Strömung ist dabei im gesamten Sedimentationsbecken jedoch sehr gering. Simulationen haben ergeben, dass die nach unten gerichtete Komponente der Strömung um etwa eine Größenordnung geringer als die Strömungsgeschwindigkeit entlang der Hauptkomponente, d. h. insbesondere in tangentiale Richtung, ist.

Ferner wurde festgestellt, dass die sich durch die Lamellen im Endabschnitt des Zulaufs gebildete Strömung in Verbindung mit einer Ablauföffnung vorteilhaft ist, welche sich im Mittelbereich des Sedimentationsbeckens befindet. Im Mittelbereich bildet sich nämlich auch wegen der durch die Lamellen verhinderten Eigenrotation der zugeführten Flüssigkeit eine im Wesentlichen strömungsfreie Zone aus. Durch die erfindungsgemäße Geometrie des Zulaufs und des Ablauf wird somit erreicht, dass die Verweilzeit der Flüssigkeit im Sedimentationsbecken ausreichend groß ist, damit Feststoffpartikel abgeschieden werden können. Auf diese Weise kann der erfindungsgemäße Schlammabscheider eine verbesserte Abscheideleistung bereitstellen.

Die Lamellen sind insbesondere parallel zueinander und jeweils in Strömungsrichtung der zugeführten Flüssigkeit im Endabschnitt angeordnet. Die Lamellen erstrecken sich insbesondere in axialer Richtung des Endabschnitts des Zulaufs.

Gemäß einer Ausgestaltung des erfindungsgemäßen Schlammabscheiders weisen die Lamellen ebene Strömungsleitflächen auf, deren Normalen jeweils orthogonal zur axialen Richtung des Endabschnitts ausgerichtet sind. Durch die Strömungsleitflächen können die Lamellen eine eigenrotationsfreie Strömung in Richtung der Zulauföffnung erzeugen, bei welcher die Flüssigkeit dann ins Sedimentationsbecken geleitet wird.

Die Lamellen können den Endabschnitt insbesondere in einem Querschnitt in mehrere separate Strömungskanäle unterteilen. Im Querschnitt können die Lamellen dabei nebeneinanderliegende Strömungskanäle bilden. Es ist jedoch auch möglich, dass die Lamellen im Querschnitt ein Gitter bilden, so dass die Strömungskanäle dann in zwei Dimensionen nebeneinander liegen. Auch hierdurch kann ein eigenrotationsfreier Zulauf der Flüssigkeit in das Sedimentationsbecken gewährleistet werden.

Vorzugsweise sind die Lamellen vertikal ausgerichtet. Es hat sich herausgestellt, dass in diesem Fall eine besonders gleichmäßige horizontale Strömung im oberen Flüssigkeitsaustauschbereich des Sedimentationsbeckens gebildet werden kann, welche verhindert, dass bereits sedimentierte Partikel durch vertikale Strömungen nach oben befördert werden. Die Normalen der Strömungsleitflächen der Lamellen sind in diesem Fall somit insbesondere horizontal ausgerichtet.

Die Erstreckung der Lamellen in axialer Richtung des Endabschnitts ist insbesondere größer als die Erstreckung in einer Querschnittsrichtung des Endabschnitts. Die Lamellen sind somit länglich in axialer Richtung des Endabschnitts gebildet. Hierdurch kann besonders wirkungsvoll eine Eigenrotation der zugeführten Flüssigkeit unterbunden werden.

Wenn bei dem erfindungsgemäßen Schlammabscheider zusätzlich zu der genannten Zulauföffnung eine oder mehrere weitere Zulauföffnungen vorgesehen sind, ist der Endabschnitt dieser weiteren Zulauföffnung oder sind die Endabschnitte dieser weiteren Zulauföffnungen so ausgerichtet wie der Endabschnitt der einen genannten Zulauföffnung, d. h. die zugeführte Flüssigkeit strömt auch über die weitere oder die weiteren Zulauföffnungen tangential zur Seitenwand des Sedimentationsbeckens ein.

Der erfindungsgemäße Schlammabscheider weist insbesondere jedoch nur die eine genannte Zulauföffnung auf. Es ist somit insbesondere keine weitere Zulauföffnung vorgesehen.

Durch Simulationsrechnungen wurde gefunden, dass beispielsweise tangentiale Zulauföffnungen, die horizontal umlaufende gegenläufige Strömungen erzeugen, nachteilig sind, da sich eine Flüssigkeitswalze ausbilden kann, welche Flüssigkeitsvolumina in vertikaler Richtung nach unten und diese vom Sediment des Sedimentationsbeckens wieder nach oben transportiert. Solche vertikalen Strömungen können durch nur eine Zulauföffnung verhindert werden.

Gemäß einer Weiterbildung des erfindungsgemäßen Schlammabscheiders ist das Verhältnis der ganzen Querschnittsfläche des Zulaufs zur kleinsten Querschnittsfläche des Ablaufs in einem Bereich von 2 bis 10, insbesondere in einem Bereich von 4 bis 8 und bevorzugt in einem Bereich von 5 bis 7. Die Ablaufgeometrie weist somit einen kleineren Querschnitt auf als die Zulaufgeometrie. Dies führt dazu, dass der Flüssigkeitsstrom im Becken angestaut wird. Dies ist insbesondere dann vorteilhaft, wenn Flüssigkeit intermittierend, wie beispielsweise bei einer Portalwaschanlage, zugeführt wird. Der impulsförmige Zulauf der Flüssigkeit wird dann nämlich ablaufseitig auf ein längeres Zeitintervall für den Ablauf gestreckt. Hierdurch wird die durchschnittliche Verweilzeit der Flüssigkeit im Sedimentationsbecken erhöht, wodurch wiederum die Abscheideleistung des Schlammabscheiders verbessert wird.

Die Ablauföffnung des erfindungsgemäßen Schlammabscheiders kann insbesondere nach unten oder nach oben ausgerichtet sein. Eine Ausrichtung der Ablauföffnung nach oben ist dabei vorteilhaft, da der Anteil von Feststoffpartikeln, welcher noch geringfügig nach oben strömt, in diesem Fall seltener in die Ablauföffnung gelangt. Eine nach unten ausgerichtete Ablauföffnung kann jedoch vorteilhaft sein, wenn der Ablauf auf diese Weise einfacher in ein vorhandenes Sedimentationsbecken integriert werden soll.

Gemäß einer Weiterbildung des erfindungsgemäßen Schlammabscheiders weist der Ablauf eine Überlauföffnung auf, welche oberhalb der Ablauföffnung angeordnet ist. Insbesondere bei einem intermittierenden Zulauf des Schmutzwassers ist es wichtig, dass eine Überlauföffnung vorgesehen ist, um eine zu große in das Sedimentationsbecken eingeleitete Flüssigkeitsmenge abführen zu können. Ferner ist die Überlauföffnung insbesondere dann wichtig, wenn der Ablaufquerschnitt des Ablaufs geringer ist als der Zulaufquerschnitt des Zulaufs.

Gemäß einer Ausgestaltung des erfindungsgemäßen Schlammabscheiders weist der Ablauf ein vertikal ausgerichtetes erstes Ablauf-Rohrstück auf, bei welchem auf einer Seite die Ablauföffnung gebildet ist, und welches auf der anderen Seite in ein horizontal ausgerichtetes zweites Ablauf-Rohrstück übergeht, welches wiederum in ein drittes Ablauf-Rohrstück mündet, welches einen größeren Querschnitt aufweist. Dabei kann das dritte Ablauf-Rohrstück oberhalb der Einmündung des zweiten Ablauf-Rohrstücks ein Wehr mit einer Überlaufkante und die Überlauföffnung aufweisen. Vorteilhafterweise kann hierdurch die Überlauföffnung in die Rohrstücke des Ablaufs kompakt integriert werden. Ablaufseitig hinter der Überlaufkante kann überlaufende Flüssigkeit mit der Flüssigkeit, welche über die Ablauföffnung abgeführt wird, zusammengeführt werden.

Gemäß einer Weiterbildung des erfindungsgemäßen Schlammabscheiders nimmt der obere Flüssigkeitsaustauschbereich in vertikaler Richtung höchstens die oberen 0 % bis 30 %, insbesondere die oberen 0 % bis 10 %, der Höhe des Sedimentationsbeckens ein. Hierdurch werden vertikal ausgerichtete Strömungen in dem Sedimentationsbecken verhindert, welche dazu führen können, dass Partikel des Sediments nach oben zur Ablauföffnung transportiert werden. Auf diese Weise kann die Abscheideleistung des Schlammabscheiders verbessert werden.

Der Sedimentbereich nimmt in vertikaler Richtung beispielsweise höchstens die unteren 0 % bis 50 %, insbesondere die unteren 0 % bis 30 %, der Höhe des Sedimentationsbeckens ein.

Gemäß einer Ausgestaltung des erfindungsgemäßen Schlammabscheiders ist die Zulauföffnung oberhalb von der Ablauföffnung angeordnet. Durch den vertikalen Abstand der Zulauföffnung von der Ablauföffnung kann der Schlammabscheider an einen intermittierenden Zulauf von Flüssigkeit angepasst werden. Ist die Zulauföffnung jedoch oberhalb der Überlaufkante angeordnet, kann der Flüssigkeitsspiegel nur bis zur Überlaufkante steigen. Anschließend wird die Flüssigkeit über die Überlauföffnung abgeführt. Da außerdem sowohl die Zulauföffnung als auch die Ablauföffnung im oberen Bereich des Sedimentationsbeckens angeordnet sind, werden horizontale Strömungen begünstigt. Es wird insbesondere vermieden, dass sich vertikale Wirbel ausbilden.

Gemäß einer Weiterbildung des erfindungsgemäßen Schlammabscheiders ist die Zulauföffnung in etwa auf derselben Höhe wie die Ablauföffnung angeordnet. Die Höhe der Zulauföffnung weicht insbesondere weniger als 15 %, insbesondere weniger als 10 %, von der Gesamthöhe des Sedimentationsbeckens von der Höhe der Ablauföffnung ab. Die Zulauföffnung ist in diesem Fall in vertikaler Richtung im Bereich des Flüssigkeitsspiegels des Sedimentationsbeckens angeordnet, welcher allerdings aufgrund von unterschiedlichen Zulauf- und Ablaufraten schwanken kann. Je nach der Füllung des Sedimentationsbeckens kann die Zulauföffnung zeitweise zumindest teilweise auch oberhalb des Flüssigkeitsspiegels angeordnet sein.

Gemäß einer Weiterbildung des erfindungsgemäßen Schlammabscheiders umfasst der Ablauf eine Saugleitung, die mit der Ablauföffnung gasdicht verbunden ist. Die Saugleitung mündet dabei auslaufseitig in eine Auslauföffnung, welche unterhalb der Ablauföffnung angeordnet ist. Durch die Saugleitung und die Höhe der Ablauföffnung kann der Flüssigkeitsspiegel im Sedimentationsbecken definiert werden, wenn keine Flüssigkeit über den Zulauf zugeführt wird. Dabei wird der Saugheber-Effekt ausgenutzt, um den Schlammabscheider auf ein definiertes Volumen zu entleeren, damit dieser anschließend eine vorbestimmte Menge an Flüssigkeit wieder aufnehmen kann. Die Ausgestaltung des Schlammabscheiders mit der Saugleitung ist insbesondere dann vorteilhaft, wenn eine bestehende Installation eines Ablaufs in einem Schlammabscheider durch die erfindungsgemäße Geometrie des Ablaufs ersetzt wird. In diesem Fall lässt sich ggf. die Höhe des Ablaufs nicht nach unten versetzen, um das entsprechende Volumen für zugeführtes Schmutzwasser zu schaffen. Mit der Saugleitung reicht es aus, die Höhe der Ablauföffnung nach unten zu versetzen, um sicherzustellen, dass Flüssigkeit bis zur Höhe der Ablauföffnung abgeführt wird. Dies setzt voraus, dass der Flüssigkeitsspiegel in einem etwaig vorgesehenen Auffangbecken außerhalb des Sedimentationsbeckens, in welches die Auslauföffnung der Saugleitung mündet, niedriger ist als die Höhe der Ablauföffnung.

Durch die Saugleitung kann auch ein Stau in den Zulauf verhindert werden, wenn nicht ausreichend Flüssigkeit über den Ablauf abgeführt werden kann, da zumindest ein definiertes Flüssigkeitsvolumen zugeführt werden kann, ohne dass dieses abgeführt werden muss. Andererseits kann ein solcher Stau durch die Überlauföffnung verhindert werden, wenn dieser in etwa in Höhe der Zulauföffnung angeordnet ist.

Bei dem erfindungsgemäßen Schlammabscheider werden folgende Effekte, welche durch die Geometrie des Zulaufs und des Ablaufs erreicht werden, miteinander kombiniert: Der Weg, den die Strömung von der Zulauföffnung zur Ablauföffnung nimmt, wird verlängert. Hierdurch wird eine verlängerte Verweilzeit der Flüssigkeit im Sedimentationsbecken erreicht. Des Weiteren wird verhindert, dass die Strömung auf Innenwände des Sedimentationsbeckens auftrifft. Die Innenwände des Sedimentationsbeckens werden allenfalls mit einem sehr spitzen Winkel angeströmt. Ferner wird eine entgegengesetzte Strömung vermindert. Hierdurch wird erreicht, dass sich keine schnellen Strömungen in vertikaler Richtung ausbilden, wodurch wiederum verhindert wird, dass sedimentierte Partikel nach oben befördert werden. Durch eine Drosselung in der Auslassgeometrie wird ein Anstauen der Flüssigkeit im Sedimentationsbecken erreicht. Hierdurch verlängert sich die Verweilzeit der Flüssigkeit im Sedimentationsbecken, wodurch die Abscheideleistung des Schlammabscheiders verbessert wird.

Die Erfindung betrifft des Weiteren eine Fahrzeugwaschanlage mit einem Schlammabscheider, wie er vorstehend beschrieben wurde. Bei der Fahrzeugwaschanlage handelt es sich insbesondere um eine Portalwaschanlage, bei der intermittierend Schmutzwasser dem Schlammabscheider zugeführt wird.

Im Folgenden wir ein Ausführungsbeispiel des erfindungsgemäßen Schlammabscheiders mit Bezug zu den Zeichnungen erläutert:
Die Erfindung wird nun anhand von Ausführungsbeispielen mit Bezug zu den Zeichnungen erläutert.
- Figur 1: zeigt ein Ausführungsbeispiel des erfindungsgemäßen Schlammabscheiders in einer perspektivischen Ansicht,
- Figur 2: zeigt einen vertikalen Querschnitt des Ausführungsbeispiels des erfindungsgemäßen Schlammabscheiders,
- Figur 3: zeigt das Ausführungsbeispiel des erfindungsgemäßen Schlammabscheiders in einer Ansicht von oben,
- Figur 4: zeigt den Zulauf des Ausführungsbeispiels des erfindungsgemäßen Schlammabscheiders in einer ersten perspektivischen Ansicht,
- Figur 5: zeigt den Zulauf des Ausführungsbeispiels des erfindungsgemäßen Schlammabscheiders in einer zweiten perspektivischen Ansicht,
- Figur 6: zeigt den Ablauf des Ausführungsbeispiels des erfindungsgemäßen Schlammabscheiders einer ersten perspektivischen Ansicht,
- Figur 7: zeigt den Ablauf des Ausführungsbeispiels des erfindungsgemäßen Schlammabscheiders einer zweiten perspektivischen Ansicht und
- Figur 8: zeigt einen vertikalen Querschnitt eines weiteren Ausführungsbeispiels des erfindungsgemäßen Schlammabscheiders,

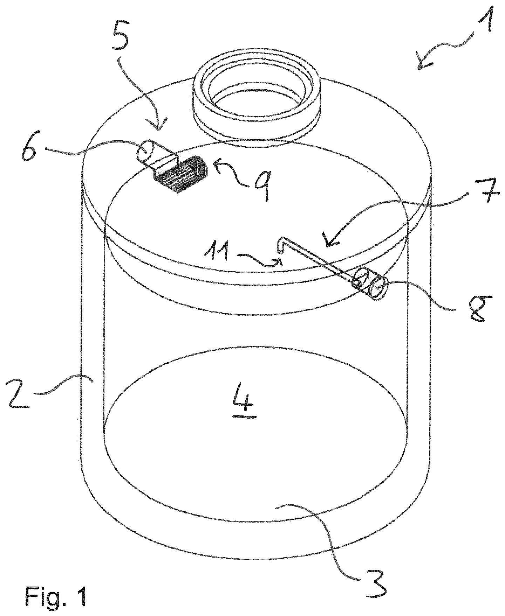

Der grundsätzliche Aufbau des erfindungsgemäßen Schlammabscheiders 1 wird im Folgenden mit Bezug zu den Figuren 1 bis 3 erläutert. Der Schlammabscheider 1 ist Teil eines Wasserkreislaufs einer Portalwaschanlage. Die dem Schlammabscheiders 1 zugeführte Feststoffpartikel führende Flüssigkeit wird daher Im Folgenden auch als Schmutzwasser bezeichnet.

Der Schlammabscheider 1 umfasst eine zylindrische Seitenwand 2, welche unten von einem kreisscheibenförmigen Boden 3 abgeschlossen wird, so dass im Inneren des Schlammabscheiders 1 ein Sedimentationsbecken 4 gebildet ist. Oben auf der zylindrischen Seitenwand 4 ist der Schlammabscheider 1 von einem Konusdeckel 18 abgeschlossen.

In vertikaler Richtung ist das Sedimentationsbecken 4 in einen unteren Sedimentbereich A, einen Zwischenbereich B und einen oberen Flüssigkeitsaustauschbereich C unterteilt. Der obere Flüssigkeitsaustauschbereich C nimmt in vertikaler Richtung beispielsweise die oberen 0 % bis 30 %, insbesondere die oberen 0 % bis 10 %, der Höhe des Sedimentationsbeckens 4 ein. Der Sedimentbereich A nimmt in vertikaler Richtung beispielsweise die unteren 0 % bis 50 %, insbesondere die unteren 0 % bis 30 %, der Höhe des Sedimentationsbeckens 4 ein.

Im oberen Flüssigkeitsaustauschbereich C sind ein Zulauf 5 und ein Ablauf 7 vorgesehen. Hierfür ist in der Seitenwand 2 eine erste Öffnung 6 für den Zulauf 5 und eine zweite Öffnung 8 für den Ablauf 7 angeordnet. Der Zulauf 5 weist eine Zulauföffnung 9 auf, über welche dem Sedimentationsbecken 4 Schmutzwasser, welches Feststoffpartikel enthält, zugeführt werden kann. Der Ablauf 7 weist eine Ablauföffnung 11 auf, über welche Flüssigkeit aus dem Sedimentationsbecken 4 herausgeführt werden kann. Weitere Details des Zulaufs 5 und des Ablaufs 7 werden später erläutert.

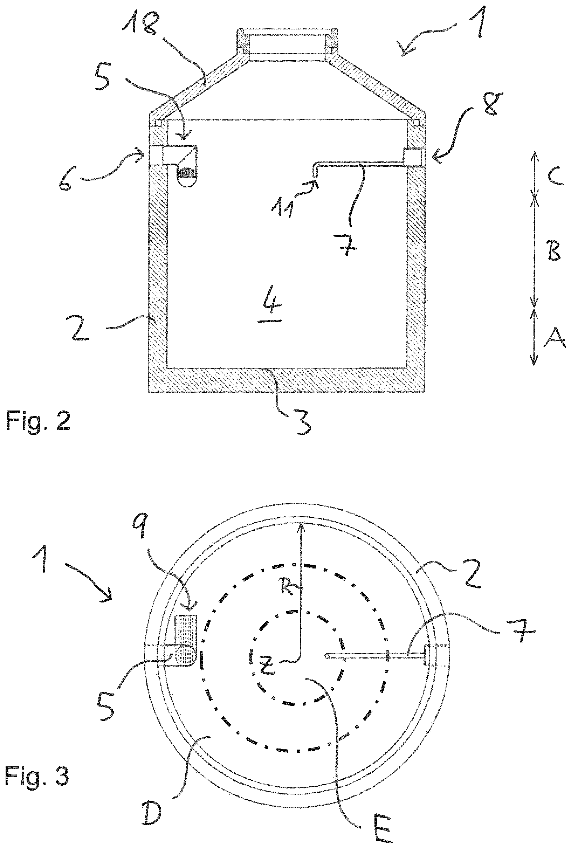

Wie in Figur 2 gezeigt, befindet sich die Zulauföffnung 9 in etwa in der Höhe der Ablauföffnung 11. In einem Gleichgewichtszustand für zugeführtes Schmutzwasser und abgeführte Flüssigkeit ist die Zulauföffnung 9 somit in Höhe des Flüssigkeitsspiegels in dem Sedimentationsbecken 4 angeordnet. Sowohl die Zulauföffnung 9 als auch die Ablauföffnung 11 befinden sich jedoch im oberen Teil des Schlammabscheiders 1, d. h. im oberen Flüssigkeitsaustauschbereich C.

Wie in Figur 3 gezeigt, ist in einer horizontalen Ebene, in welcher die Zulauf- 9 und die Ablauföffnung 11 angeordnet sind, ein Randbereich D und ein Mittelbereich E gebildet. Ausgehend von dem Mittelpunkt Z des horizontalen Querschnitts des Sedimentationsbeckens 4 reicht der Randbereich D von außen 0 % bis 30 %, insbesondere von 0 % bis 10 %, des Radius R in Richtung des Mittelpunkts Z und der Mittelbereich E reicht ausgehend vom Mittelpunkt Z bis 40 %, insbesondere 30 %, des Radius R in Richtung des Randes bei der Seitenwand 2 des Sedimentationsbeckens 4. Der Radius R des Sedimentationsbeckens 4 beträgt dabei 1 m.

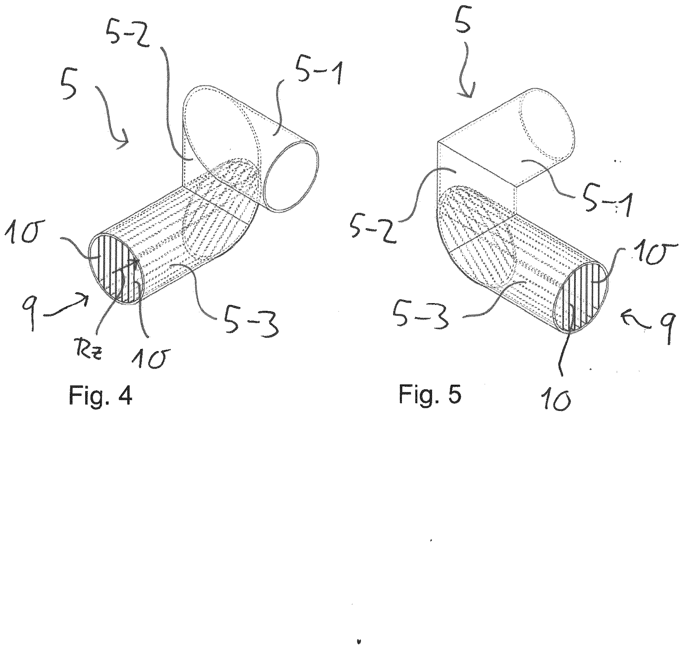

Im Folgenden werden mit Bezug zu den Figuren 4 und 5 Details des Zulaufs 5 erläutert:
Der Zulauf 5 weist ein erstes Zulauf-Rohrstück 5-1 auf. Dieses erste Zulauf-Rohrstück 5-1 ist mit einer Öffnung in die erste Öffnung 6 der Seitenwand 2 eingesetzt. Es ist horizontal ausgerichtet. An dem anderen Ende des ersten Zulauf-Rohrstücks 5-1 schließt sich ein zweites Zulauf-Rohrstück 5-2 an, welches vertikal ausgerichtet ist. An dieses zweite Zulauf-Rohrstück schließt sich ein drittes Zulauf-Rohrstück 5-3 an, welches auch als Endabschnitt 5-3 des Zulaufs 5 bezeichnet wird. Dieser Endabschnitt 5-3 ist so ausgerichtet, dass das über den Zulauf 5 zugeführte Schmutzwasser tangential in das Sedimentationsbecken 4 einströmt. Es ist im Übrigen horizontal ausgerichtet. Die Zulauf-Rohrstücke 5-1 bis 5-3 haben einen Durchmesser von 150 mm. Die Zulauföffnung 9 befindet sich im äußeren Randbereich D des Sedimentationsbeckens 4. Die Normale der von der Zulauföffnung 9 gebildeten Fläche ist dabei tangential zu Seitenwand 2 des Sedimentationsbeckens 4 und horizontal ausgerichtet.

Der Schlammabscheider 1 weist nur die eine Zulauföffnung 9 zum Zuführen von Schmutzwasser in das Sedimentationsbecken 4 auf.

In dem Endabschnitt 5-3 sind mehrere Lamellen 10 angeordnet, die parallel zueinander ausgerichtet sind. Der Endabschnitt 5-3 ist zylinderförmig, so dass eine axiale Richtung des Endabschnitts 5-3 definiert ist. Diese axiale Richtung ist horizontal und tangential zu der zylindrischen Seitenwand 2 ausgerichtet. Die Lamellen 10 sind vertikal ausgerichtet. Sie unterteilen den Endabschnitt 5-3 in einen Querschnitt senkrecht zur axialen Richtung des Endabschnitts 5-3 in mehrere separate Strömungskanäle. Die Lamellen 10 weisen ebene Strömungsleitflächen auf, deren Normalen jeweils orthogonal zur axialen Richtung des Endabschnitts 5-3 ausgerichtet sind. Die Normalen der Strömungsleitflächen der Lamellen 10 sind somit horizontal ausgerichtet. Der Endabschnitt 5-3 mündet in die Zulauföffnung 9. Die Zulauföffnung 9 ist dabei in die Öffnungen unterteilt, welche von den Strömungskanälen gebildet werden, die von den Lamellen 10 gebildet sind. Die Gesamtfläche der Zulauföffnung 9 besitzt den Radius Rz. Die Normale der Fläche der Zulauföffnung 9 ist horizontal ausgerichtet und tangential in Bezug auf die zylindrische Seitenwand 2.

Die Lamellen 10 sind als dünne ebene Platten ausgebildet, die in das dritte Zulauf-Rohrstück 5-3 vertikal eingesetzt sind, wobei deren Erstreckung in axialer Richtung des dritten Zulauf-Rohrstücks 5-3 größer ist als in der Querschnittsrichtung des Zulauf-Rohrstücks 5-3. Die Lamellen 10 sorgen dafür, dass das zugeführte Schmutzwasser, welches durch die winklige Anordnung der drei Zulauf-Rohrstücke 5-1 bis 5-3 zu einer Eigenrotation neigt, so im Endabschnitt 5-3 geleitet wird, dass diese Eigenrotation verloren geht und das Schmutzwasser bei der Zulauföffnung 9 tangential und horizontal in das Sedimentationsbecken 4 eintritt, wobei eine etwaige vertikale Geschwindigkeitskomponente des eintretenden Schmutzwassers minimiert wird.

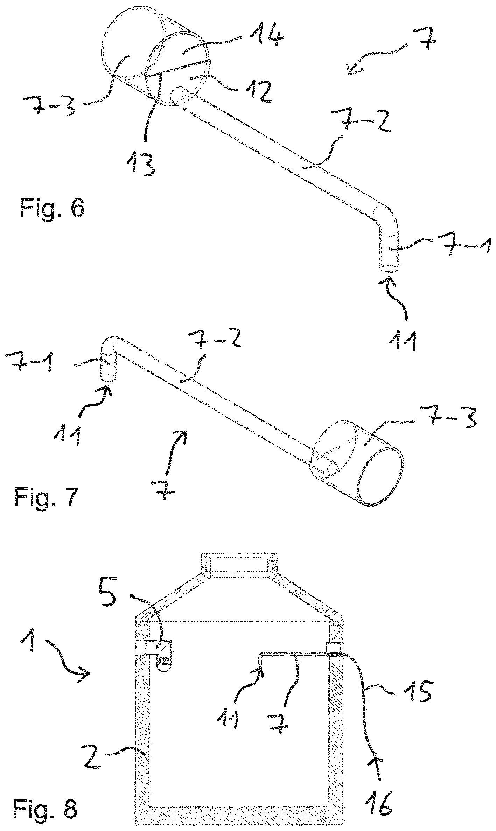

Mit Bezug zu den Figuren 6 und 7 werden im Folgenden Details des Ablaufs 7 erläutert:
Der Ablauf 7 weist ein erstes Ablauf-Rohrstück 7-1 auf, bei welchem an einem Ende die Ablauföffnung 11 gebildet ist. Das erste Ablauf-Rohrstück 7-1 ist vertikal ausgerichtet. Die Normale der von der Ablauföffnung 11 gebildeten Fläche ist vertikal ausgerichtet. In dem hier beschriebenen Ausführungsbeispiel zeigt die Normale der Fläche der Ablauföffnung 11 nach unten. Alternativ kann die Normale der Fläche der Ablauföffnung 11 jedoch auch nach oben zeigen. Am anderen Ende geht das erste Ablauf-Rohrstück 7-1 in ein längeres zweites Ablauf-Rohrstück über, welches horizontal ausgerichtet ist. Das zweite Ablauf-Rohrstück 7-2 geht wiederum in ein drittes Ablauf-Rohrstück 7-3 über, welches einen größeren Querschnitt aufweist. Das stromabwärtige Ende des dritten Ablauf-Rohrstücks 7-3 ist in die zweite Öffnung 8 der Seitenwand 2 eingesetzt.

Der Innendurchmesser des dritten Ablauf-Rohrstücks 7-3 beträgt 140 mm, der Innendurchmesser der Ablauföffnung 11, des ersten Ablauf-Rohstücks 7-1 und des zweiten Ablauf-Rohrstücks 7-2 beträgt jeweils 25 mm, und die Überlaufkante 13 ist 72 mm oberhalb der unteren Einmündung des zweiten Ablauf-Rohrstücks 7-2 in das dritte Ablauf-Rohrstück 7-3 angeordnet.

Der Ablauf 7 ist so in den Schlammabscheider 1 eingesetzt, dass sich die Ablauföffnung 11 im Mittelbereich E des Sedimentationsbeckens 4 befindet. Über den Ablauf 7 wird somit Flüssigkeit aus dem Sedimentationsbecken 4 von der Mitte her abgeführt.

Der Ablauf 7 weist einen geringeren Querschnitt als der Zulauf 5 auf, so dass das Schmutzwasser 5 über den Zulauf 5 mit einer höheren Volumenrate zugeführt werden kann, als über den Ablauf 7 Flüssigkeit aus dem Sedimentationsbecken 4 abgeführt wird. Bei dem beschriebenen Ausführungsbeispiel des Schlammabscheiders 1 ist das Verhältnis der kleinsten Querschnittsfläche des Zulaufs 5 zur kleinsten Querschnittsfläche des Ablaufs 7 sechs.

Im Betrieb des Schlammabscheiders 1 wird dem Sedimentationsbecken 4 Schmutzwasser insbesondere intermittierend zugeführt, so dass der Flüssigkeitsspiegel im Sedimentationsbecken 4 von einer minimalen Höhe zu einer maximalen Höhe ansteigt. Sobald der Flüssigkeitsspiegel den höchsten Punkt des Ablaufs 7 überschreitet, wird gleichzeitig Flüssigkeit über den Ablauf 7 aus dem Sedimentationsbecken 4 herausgeführt. Damit der Flüssigkeitsspiegel in dem Sedimentationsbecken 4 nicht über eine Grenzhöhe ansteigt, ist bei dem Ablauf 7 eine Überlauföffnung 14 vorgesehen, welche oberhalb der Ablauföffnung 11 angeordnet ist. Die Überlauföffnung 14 wird von einem Wehr 12 nach unten begrenzt, welches eine Überlaufkante 13 bildet. Das Wehr 12 befindet sich bei der Einmündung des zweiten Ablauf-Rohrstücks 7-2 in das dritte Ablauf-Rohrstück 7-3, wie es in den Figuren 6 und 7 gezeigt ist.

Der obere Flüssigkeitsaustauschbereich C (siehe Figur 2) kann so definiert werden, dass er nach oben bis zu Überlaufkante 13 reicht.

Um einen minimalen Flüssigkeitsspiegel einzustellen, wenn kein Schmutzwasser über den Zulauf 5 zugeführt wird, kann bei einem weiteren Ausführungsbeispiel, das in Figur 8 gezeigt ist, eine Saugleitung 15 vorgesehen werden. Diese Saugleitung 15 ist gasdicht mit der Ablauföffnung 11 verbunden. Die Saugleitung 15 kann beispielsweise bei der Einmündung des zweiten Ablauf-Rohrstücks 7-2 in das dritte Ablauf-Rohrstück 7-3 an die Öffnung des zweiten Ablauf-Rohrstücks 7-2 angeschlossen werden (siehe Figur 7).

Auslaufseitig wird die Saugleitung 15 dann außerhalb der Seitenwand 2 nach unten, beispielsweise in ein Auffangbecken, geführt. Die Saugleitung 15 weist außerhalb der Seitenwand 2 eine Auslauföffnung 16 auf, die unterhalb der Ablauföffnung 11 angeordnet ist. Mittels der Saugleitung 15 kann durch den Saugheber-Effekt der Flüssigkeitsspiegel in dem Sedimentationsbecken 4 durch die Höhe der Ablauföffnung 11 unabhängig von dem höchsten Punkt des Ablaufs 7 festgelegt werden, wenn kein Schmutzwasser mehr über den Zulauf 5 zugeführt wird. Dieser Flüssigkeitsspiegel befindet sich dann in Höhe der Ablauföffnung 11, sofern der Flüssigkeitsspiegel in einem Auffangbecken, in welches die Auslassöffnung 16 mündet, unterhalb der Höhe der Ablauföffnung 11 liegt. Wenn dann wieder Schmutzwasser, beispielsweise einer Portalwaschanlage, dem Sedimentationsbecken 4 über den Zulauf 5 zugeführt wird, steigt der Flüssigkeitsspiegel an. Dieser Anstieg verlangsamt sich, wenn der Flüssigkeitsspiegel den höchsten Punkt des Ablaufs 7 überschritten hat, da dann über den Ablauf 7 Flüssigkeit aus dem Sedimentationsbecken 4 herausgeführt wird. Der Volumenstrom des Ablaufs 7 ist jedoch wegen der geringeren Querschnittsfläche geringer als der über den Zulauf 5 zugeführte Volumenstrom des Schmutzwassers. Der Anstieg des Flüssigkeitsspiegels wird somit verlangsamt. Sollte der Flüssigkeitsspiegel die Höhe der Überlaufkante 13 überschreiten, läuft Flüssigkeit über die Überlauföffnung 14 ab. Wenn der Zustrom des Schmutzwassers über den Zulauf 5 endet, senkt sich der Flüssigkeitsspiegel bis zum höchsten Punkt des Ablaufs 7, oder, wenn die Saugleitung 15 verwendet wird, bis zur Ablauföffnung 11.

Zu dem Schlammabscheider 1 wurden Strömungssimulationen durchgeführt, um zu ermitteln, welche Strömungen sich im Sedimentationsbecken 4 einstellen. Bei der Simulation wurde davon ausgegangen, dass Flüssigkeit, genauer ein inkompressibles zweiphasiges Fluid aus Luft und Wasser, über den Zulauf 5 bei einem Umgebungsdruck von 1,013 bar zugeführt und über den Ablauf 7 abgeführt wird. Es wurde ein adaptives Netz an der freien Wasseroberfläche zugrundegelegt. Die instationäre Simulation wurde mit Zeitschritten von 0,025 s über eine Simulationszeit von 180 s durchgeführt. Dabei strömte Wasser mit 200 l/min ein. Über den Ablauf 7 stellte sich ein Volumenstrom von bis zu 12,8 l/min ein, welcher aus dem Sedimentationsbecken 4 herausgeführt wird. Die Zulauföffnung befand sich in einer Höhe von 1,67 m. Bis zu einer Höhe von 0,835 m über dem Boden des Sedimentationsbeckens 4 befanden sich sedimentierte Partikel.

Das Strömungsverhalten in dem Sedimentationsbecken 4, welches bei der Simulation beobachtet wurde, lässt sich wie folgt zusammenfassen:
Durch den Zustrom der Flüssigkeit steigt der Flüssigkeitsspiegel an. Beim Einströmen entsteht eine Rotationsströmung. Hierdurch wird ein Unterdruckgebiet in der Mitte des Sedimentationsbeckens 4 erzeugt, aus dem die ausströmende Flüssigkeit über die Ablauföffnung 11 aus dem Sedimentationsbecken 4 herausgeführt wird. Zu Beginn des Einstromvorgangs ergibt sich neben der tangentialen Strömungsrichtung im Sedimentationsbecken 4 eine geringfügige vertikale Strömungsrichtung nach unten, welche sich jedoch wieder verringert, sobald sich die Rotationsströmung stabilisiert hat. Hat ein Flüssigkeitsvolumen das Sedimentationsbecken 4 umfangsseitig umrundet, ergibt sich eine geringe Strömung nach unten, wenn dieses Flüssigkeitsvolumen wieder auf zulaufende Flüssigkeit trifft.

Betrachtet man horizontale Querschnitte des Sedimentationsbeckens 4, ergibt sich aus mittlerer Höhe des Sedimentationsbeckens 4 im Wesentlichen keine Vertikalströmung nach unten oder nach oben. Es wird somit keine Sediment nach oben transportiert. Erst 125 mm unterhalb der Zulauföffnung 9 ergibt sich beim Einströmen des Fluids eine vertikale Strömungskomponente, die mit zunehmender Einströmdauer geringer wird. Betrachtet man einen Querschnitt in Höhe der Zulauföffnung 9, zeigt sich, dass sich zunächst im äußeren Randbereich umlaufend eine vertikale Strömungskomponente ausbildet, welche jedoch geringer wird, sobald sich ein horizontal umlaufender Zustromwirbel gebildet hat. In der Mitte bei der Ablauföffnung 11 bildet sich ein strömungsarmer Bereich, der im Wesentlichen keine Vertikalströmung aufweist. Eine Vertikalströmung ergibt sich nur durch die Flüssigkeit, welche über die Ablauföffnung 11 in das erste Ablauf-Rohrstück 7-1 in den Ablauf 7 eintritt.

### Bezugszeichenliste

- 1: Schlammabscheider
- 2: zylindrische Seitenwand
- 3: Boden
- 4: Sedimentationsbecken
- 5: Zulauf
- 5-1: erstes Zulauf-Rohrstück
- 5-2: zweites Zulauf-Rohrstück
- 5-3: drittes Zulauf-Rohrstück; Endabschnitt
- 6: erste Öffnung der Seitenwand
- 7: Ablauf
- 7-1: erstes Ablauf-Rohrstück
- 7-2: zweites Ablauf-Rohrstück
- 7-3: drittes Ablauf-Rohrstück
- 8: zweite Öffnung der Seitenwand
- 9: Zulauföffnung
- 10: Lamellen
- 11: Ablauföffnung
- 12: Wehr
- 13: Überlaufkante
- 14: Überlauföffnung
- 15: Saugleitung
- 16: Auslauföffnung
- 17: Sediment
- 18: Konusdeckel
- A: unterer Sedimentbereich
- B: Zwischenbereich
- C: oberer Flüssigkeitsaustauschbereich
- R: Radius des Sedimentationsbeckens
- Z: Mittelpunkt
- Rz: Radius der Zulauföffnung

## Patentansprüche

1. Schlammabscheider (1) mit
einem Sedimentationsbecken (4), das eine Seitenwand (2) und einen Boden (3) aufweist, wobei das Sedimentationsbecken (4) in vertikaler Richtung in einen unteren Sedimentbereich (A), einen Zwischenbereich (B) und einen oberen Flüssigkeitsaustauschbereich (C) unterteilt ist,
einem Zulauf (5) zum Zuführen einer Feststoffpartikel führenden Flüssigkeit in das Sedimentationsbecken (4), der einen Endabschnitt (5-3) mit einer Zulauföffnung (9) aufweist,
wobei die Zulauföffnung (9) in vertikaler Richtung im oberen Flüssigkeitsaustauschbereich (C) angeordnet ist und in einer horizontalen Ebene in einen Randbereich des Sedimentationsbeckens (4) in das Sedimentationsbecken (4) mündet und wobei der Endabschnitt (5-3) so ausgerichtet ist, dass die zugeführte Flüssigkeit tangential in das Sedimentationsbecken (4) einströmt, und
einem Ablauf (7) zum Abführen von Flüssigkeit aus dem Sedimentationsbecken (4), der eine Ablauföffnung (11) aufweist, welche in vertikaler Richtung im oberen Flüssigkeitsaustauschbereich (C) angeordnet ist, wobei die Ablauföffnung (11) in einer horizontalen Ebene in einem Mittelbereich des Sedimentationsbeckens (4) angeordnet ist, **dadurch gekennzeichnet, dass**
in dem Endabschnitt (5-3) des Zulaufs (5) mehrere Lamellen (10) angeordnet sind.

2. Schlammabscheider (1) nach Anspruch 1,
**dadurch gekennzeichnet, dass**
der Endabschnitt (5-3) des Zulaufs (5) gerade ausgebildet ist.

3. Schlammabscheider (1) nach Anspruch 1 oder 2,
**dadurch gekennzeichnet, dass**
der Endabschnitt (5-3) des Zulaufs (5) im Wesentlichen tangential in Bezug auf das Sedimentationsbecken(4) ausgerichtet ist.

4. Schlammabscheider (1) nach einem der vorhergehenden Ansprüche,
**dadurch gekennzeichnet, dass**
der Endabschnitt (5-3) des Zulaufs (5) im Wesentlichen horizontal ausgerichtet ist.

5. Schlammabscheider (1) nach einem der vorhergehenden Ansprüche,
**dadurch gekennzeichnet, dass**
die Lamellen (10) parallel zueinander ausgerichtet sind.

6. Schlammabscheider (1) nach einem der vorhergehenden Ansprüche,
**dadurch gekennzeichnet, dass**
die Lamellen (10) jeweils in Strömungsrichtung der zuzuführenden Flüssigkeit im Endabschnitt (5-3) angeordnet sind.

7. Schlammabscheider (1) nach einem der vorhergehenden Ansprüche,
**dadurch gekennzeichnet, dass**
dass die Lamellen (10) ebene Strömungsleitflächen aufweisen, deren Normalen jeweils orthogonal zur axialen Richtung des Endabschnitts (5-3) ausgerichtet sind.

8. Schlammabscheider (1) nach einem der vorhergehenden Ansprüche,
**dadurch gekennzeichnet, dass**
dass die Lamellen (10) den Endabschnitt (5-3) in einem Querschnitt in mehrere separate Strömungskanäle unterteilen.

9. Schlammabscheider (1) nach einem der vorhergehenden Ansprüche,
**dadurch gekennzeichnet, dass**
die Lamellen (10) vertikal ausgerichtet sind.

10. Schlammabscheider (1) nach einem der vorhergehenden Ansprüche,
**dadurch gekennzeichnet, dass**
die Erstreckung der Lamellen (10) in axialer Richtung des Endabschnitts (5-3) größer ist als in einer Querschnittsrichtung des Endabschnitts (5-3).

11. Schlammabscheider (1) nach einem der vorhergehenden Ansprüche,
**dadurch gekennzeichnet, dass**
das Verhältnis der kleinsten Querschnittsfläche des Zulaufs (5) zur kleinsten Querschnittsfläche des Ablaufs (7) in einem Bereich von 2 bis 10 liegt, insbesondere in einem Bereich von 4 bis 8 liegt.

12. Schlammabscheider (1) nach einem der vorhergehenden Ansprüche,
**dadurch gekennzeichnet, dass**
der Ablauf (7) eine Überlauföffnung (14) aufweist, welche oberhalb der Ablauföffnung (11) angeordnet ist.

13. Schlammabscheider (1) nach Anspruch 12,
**dadurch gekennzeichnet, dass**
der Ablauf (7) ein vertikal ausgerichtetes, erstes Ablauf-Rohrstück (7-1) aufweist, bei welchem auf einer Seite die Ablauföffnung (11) gebildet ist und welches auf der anderen Seite in ein horizontal ausgerichtetes zweites Ablauf-Rohrstück (7-2) übergeht, welches wiederum in ein drittes Ablauf-Rohrstück (7-3) mündet, welches einen größeren Querschnitt aufweist, und
das dritte Ablauf-Rohrstück (7-3) oberhalb der Einmündung des zweiten Ablauf-Rohrstücks (7-2) ein Wehr (12) mit einer Überlaufkante (13) und die Überlauföffnung (14) aufweist.

14. Schlammabscheider (1) nach einem der vorhergehenden Ansprüche,
**dadurch gekennzeichnet, dass**
der Ablauf (7) eine Saugleitung (15) umfasst, die mit der Ablauföffnung (11) gasdicht verbunden ist und
die Saugleitung (15) auslaufseitig in eine Auslauföffnung (16) mündet, welche unterhalb der Ablauföffnung (11) und oberhalb eines Bodens des Sedimentationsbeckens (2) angeordnet ist.

15. Fahrzeugwaschanlage mit einem Schlammabscheider (1) nach einem der vorhergehenden Ansprüche.

## Claims

1. Sludge separator (1) having
a sedimentation tank (4) that has a side wall (2) and a base (3), wherein the sedimentation tank (4) is divided in the vertical direction into a lower sedimentation region (A), an intermediate region (B) and an upper fluid exchange region (C),
an inlet (5) for supplying a fluid carrying solid particles into the sedimentation tank (4), which inlet has an end section (5-3) having an inlet opening (9),
wherein the inlet opening (9) is arranged in the upper fluid exchange region (C) in the vertical direction and opens into the sedimentation tank (4) in a horizontal plane in a peripheral region of the sedimentation tank (4) and wherein the end section (5-3) is orientated such that the supplied fluid flows into the sedimentation tank (4) tangentially, and
an outlet (7) for discharging fluid out of the sedimentation tank (4), which outlet has an outlet opening (11) which is arranged in the upper fluid exchange region (C) in the vertical direction, wherein the outlet opening (11) is arranged in a central region of the sedimentation tank (4) in a horizontal plane,
**characterised in that**
several fins (10) are arranged in the end section (5-3) of the inlet (5).

2. Sludge separator (1) according to claim 1,
**characterised in that**
the end section (5-3) of the inlet (5) is straight.

3. Sludge separator (1) according to claim 1 or 2,
**characterised in that**
the end section (5-3) of the inlet (5) is orientated substantially tangentially in relation to the sedimentation tank (4).

4. Sludge separator (1) according to one of the preceding claims,
**characterised in that**
the end section (5-3) of the inlet (5) is orientated substantially horizontally.

5. Sludge separator (1) according to one of the preceding claims,
**characterised in that**
the fins (10) are orientated parallel to each other.

6. Sludge separator (1) according to one of the preceding claims,
**characterised in that**
the fins (10) are each arranged in the end section (5-3) in the flow direction of the fluid to be supplied.

7. Sludge separator (1) according to one of the preceding claims,
**characterised in that**
the fins (10) have even flow guiding surfaces, the normals of which are each orientated orthogonally to the axial direction of the end section (5-3).

8. Sludge separator (1) according to one of the preceding claims,
**characterised in that**
the fins (10) divide the end section (5-3) into several separate flow channels in a cross-section.

9. Sludge separator (1) according to one of the preceding claims,
**characterised in that**
the fins (10) are vertically orientated.

10. Sludge separator (1) according to one of the preceding claims,
**characterised in that**
the extension of the fins (10) in the axial direction of the end section (5-3) is larger than in a cross-sectional direction of the end section (5-3).

11. Sludge separator (1) according to one of the preceding claims,
**characterised in that**
the ratio of the smallest cross-sectional area of the inlet (5) to the smallest cross-sectional area of the outlet (7) is in a range of 2 to 10, in particular in a range of 4 to 8.

12. Sludge separator (1) according to one of the preceding claims,
**characterised in that**
the outlet (7) has an overflow opening (14) which is arranged above the outlet opening (11).

13. Sludge separator (1) according to claim 12,
**characterised in that**
the outlet (7) has a vertically orientated first outlet pipe piece (7-1) which has the outlet opening (11) formed on one side and which merges on the other side into a horizontally orientated second outlet pipe piece (7-2), which in turn opens into a third outlet pipe piece (7-3) which has a larger cross-section, and
the third outlet pipe piece (7-3) has a dam (12) having an overflow edge (13) and the overflow opening (14) above the opening of the second outlet pipe piece (7-2).

14. Sludge separator (1) according to one of the preceding claims,
**characterised in that**
the outlet (7) comprises a suction hose (15) which is connected with the outlet opening (11) in a gas-tight manner and
the suction hose (15) opens on the outflow side into a discharge opening (16) which is arranged underneath the outlet opening (11) and above a base of the sedimentation tank (2).

15. Vehicle washing system having a sludge separator (1) according to one of the preceding claims.

## Revendications

1. Décanteur de boues (1), comprenant :
une cuve de décantation (4), présentant une paroi latérale (2) et un fond (3), ladite cuve de décantation (4) étant verticalement divisée en une zone de décantation en partie basse (A), une zone intermédiaire (B) et une zone d'échange de liquides en partie haute (C),
une arrivée (5) destinée à amener un liquide transportant des particules solides dans la cuve de décantation (4), ladite arrivée présentant une partie terminale (5-3) munie d'un orifice d'alimentation (9),
l'orifice d'alimentation (9) étant disposé verticalement dans la zone d'échange de liquides en partie haute (C) et débouchant dans un plan horizontal dans une zone périphérique de la cuve de décantation (4) à l'intérieur de la cuve de décantation (4), la partie terminale (5-3) étant orientée de sorte que le liquide transporté pénètre tangentiellement dans la cuve de décantation (4),
et, pour permettre au liquide d'être évacué de la cuve de décantation (4), une évacuation (7) présentant un orifice d'évacuation (11) disposé verticalement dans la zone d'échange de liquides en partie haute (C), l'orifice d'évacuation (11) étant disposé dans un plan horizontal dans une zone médiane de la cuve de décantation (4),
**caractérisé en ce que**
plusieurs lamelles (10) sont disposées dans la partie terminale (5-3) de l'arrivée (5).

2. Décanteur de boues (1) selon la revendication 1,
**caractérisé en ce que**
la partie terminale (5-3) de l'arrivée (5) est de forme rectiligne.

3. Décanteur de boues (1) selon l'une quelconque des revendications 1 ou 2,
**caractérisé en ce que**
la partie terminale (5-3) de l'arrivée (5) est orientée à peu près tangentiellement à la cuve de décantation (4).

4. Décanteur de boues (1) selon l'une quelconque des revendications précédentes, **caractérisé en ce que**
la partie terminale (5-3) de l'arrivée (5) est orientée à peu près horizontalement.

5. Décanteur de boues (1) selon l'une quelconque des revendications précédentes, **caractérisé en ce que**
les lamelles (10) sont parallèles les unes aux autres.

6. Décanteur de boues (1) selon l'une quelconque des revendications précédentes, **caractérisé en ce que**
les lamelles (10) sont chacune disposées dans la direction d'écoulement du liquide à amener dans la partie terminale (5-3).

7. Décanteur de boues (1) selon l'une quelconque des revendications précédentes, **caractérisé en ce que**
les lamelles (10) présentent des surfaces de guidage d'écoulement planes dont la normale est orientée orthogonalement par rapport à la direction axiale de la partie terminale (5-3).

8. Décanteur de boues (1) selon l'une quelconque des revendications précédentes, **caractérisé en ce que**
les lamelles (10) divisent une section transversale de la partie terminale (5-3) en plusieurs canaux d'écoulement distincts.

9. Décanteur de boues (1) selon l'une quelconque des revendications précédentes, **caractérisé en ce que**
les lamelles (10) sont orientées verticalement.

10. Décanteur de boues (1) selon l'une quelconque des revendications précédentes, **caractérisé en ce que**
l'étendue des lamelles (10) dans la direction axiale de la partie terminale (5-3) est plus grande que dans la direction de la section transversale de la partie terminale (5-3).

11. Décanteur de boues (1) selon l'une quelconque des revendications précédentes, **caractérisé en ce que**
le rapport entre la plus petite aire de la section transversale de l'arrivée (5) et la plus petite aire de la section transversale de l'évacuation (7) se situe dans une plage de 2 à 10 et en particulier dans une plage de 4 à 8.

12. Décanteur de boues (1) selon l'une quelconque des revendications précédentes, **caractérisé en ce que**
l'évacuation (7) présente un orifice de trop-plein (14) disposé au-dessus de l'orifice d'évacuation (11).

13. Décanteur de boues (1) selon la revendication 12,
**caractérisé en ce que**
l'évacuation (7) présente un premier tronçon de tube d'évacuation (7-1) orienté verticalement qui, d'un côté, constitue l'orifice d'évacuation (11) et, de l'autre, se poursuit sous la forme d'un deuxième tronçon de tube d'évacuation (7-2) orienté horizontalement, lequel débouche à son tour dans un troisième tronçon de tube d'évacuation (7-3) de section transversale plus grande
et **en ce que** le troisième tronçon de tube d'évacuation (7-3) présente, au-dessus de la jonction avec le deuxième tronçon de tube d'évacuation (7-2), présente un déversoir (12) muni d'un bord-déversoir (13) et d'un orifice de trop-plein (14).

14. Décanteur de boues (1) selon l'une quelconque des revendications précédentes, **caractérisé en ce que**
l'évacuation (7) comprend une conduite d'aspiration (15) qui est reliée à l'orifice d'évacuation (11) de manière étanche au gaz
et **en ce que**, du côté évacuation, la conduite d'aspiration (15) débouche dans un orifice d'évacuation (16) qui est disposé en dessous de l'orifice d'évacuation (11) et au-dessus d'un fond de la cuve de décantation (2).

15. Installation de lavage des véhicules comportant un décanteur de boues (1) selon l'une quelconque des revendications précédentes.
